# EUROPEAN PATENT SPECIFICATION

(11) **EP 0 774 597 B1**
(45) Date of publication and mention of the grant of the patent: **03.07.2002**
(21) Application number: 96912283.7
(22) Date of filing: 30.04.1996
(51) Int. Cl.: F16G 5/20, F16G 5/06

(54) **COGGED V BELT**
GEZAHNTER KEILRIEMEN
COURROIE TRAPEZOIDALE CRANTEE

(30) Priority: 01.05.1995 JP 10725195
(43) Date of publication of application: 21.05.1997
(73) Proprietor: BANDO CHEMICAL INDUSTRIES, LTD., Kobe-shi, Hyogo 652-0883 (JP); HONDA GIKEN KOGYO KABUSHIKI KAISHA, Minato-ku, Tokyo 107 (JP)
(72) Inventor: UESUGI, Takeru, Bando Chemical Ind., Ltd., Kobe-shi, Hyogo 652652 (JP); TAKAHASHI, Osamu, Bando Chemical Ind., Ltd., Kobe-shi, Hyogo 652 (JP); TATEMICHI, Yoshihiko, Wako-shi, Saitama 351-01 (JP)
(74) Representative: Bannerman, David Gardner
(86) International application number: JP9601181
(87) International publication number: WO9635062

(56) References cited:
- DE-A- 2 300 196
- JP-A- 61 179 729
- JP-B- 32 008 888
- JP-Y- 2 037 310
- JP-Y- 57 024 997
- JP-Y- 57 057 241
- JP-Y- 63 042 194
- US-A- 3 464 875
- US-A- 3 968 703
- US-A- 4 892 510

## Description

### [Technical Field]

This invention relates to a cogged V-belt and in particular relates to measures for forming cogs of a cogged V-belt used as a variable speed V-belt for motorcycle having a small V-belt angle.

### [Background Art]

As a variable speed V-belt for vehicle engine, industrial machine or the like, some types of cogged V-belts having high flexibility and an excellent bending property are commonly used. Out of them, a raw edge cogged V-belt of which the side surfaces are covered with no fabric is versatile.

Such a raw edge cogged V-belt may readily produce a slip, when used at a high speed rotation, because its pulley diameter at the time is small. Heat production or the like due to the slip causes clack and breakage of the belt thereby shortening the belt life. Therefore, in the raw edge cogged V-belt, each material of the top fabric and bottom fabric is selected so as to increase the belt in bending property thereby reducing the frequency of occurrence of slip. For example, the following techniques have been performed which are disclosed in Japanese Patent Publication No.2-47795: In this prior art, a bias fabric in which warp yarns and weft yarns are bias oriented at an intersection angle of 90-120° may be used as a top fabric so as to enhance the bending property on the belt back face side, or otherwise a fabric having excellent stretchability made of woollie yarns may be used as a bottom fabric so that cogs can be readily formed at the time of molding thereby increasing the bending property on the belt bottom face side.

US-A-3 968 703 discloses an elastomeric, endless, cog-type, power transmission belt that comprises an outer tension section, an intermediate corded load-carrying section, and an inner compression section provided with stiffening members.

### -Problems to be solved-

However, even though the above-mentioned cogged V-belt is increased in bending property by using the top fabric formed of a bias fabric or the bottom fabric made of woollie yarns, in the case that an engine is frequently started and stopped as in applications to motorcycles such as a scooter used for distribution of goods, the frequency of use of the low gear that the diameter of a driving pulley of a transmission is very small and high torque is transmitted to the belt at a low speed rotation is high as compared with a usual four-wheeled vehicle, thereby frequently producing slips resulting in the shortened belt life. Therefore, it is necessary to further enhance the bending property of the cogged V-belt thereby increasing power transmission performance of the belt. In cogged V-belts commonly used as variable speed V-belts for motorcycle such as a scooter, the V-belt angle between both side surfaces of the belt body is set to 24-34°.

In the case of cogged V-belts whose cog height is originally set low, even though the bottom fabric made of woollie yarns has excellent stretchability, its stretchability is limited since the bottom fabric is a woven fabric formed in a way that weaves warp yarns and weft yarns. Therefore, the bottom fabric may be hard to fit to bumps and dips of the surface of a mold corresponding to the form of cogs depending on pouring pressure of unvulcanised rubber in molding. This may make it hard to project cogs to a desired dimension so that an excellent bending property cannot be obtained on the belt bottom face side.

### [Disclosure of Invention]

The present invention has been made in view of the foregoing circumstances. An object of the present invention is to enhance a bending property of a cogged V-belt used as a variable speed V-belt for motorcycle such as a scooter thereby reducing the frequency of occurrence of slip and to prevent production of cracks and breakages of the belt thereby increasing the belt life, by means of changing material of the top fabric and/or the bottom fabric to that not restricting the bending property of the cogged V-belt, or defining the belt portion to which the top fabric and/or the bottom fabric is applied, or eliminating the top fabric and/or the bottom fabric beyond standard concepts that it should be.

### -Structure-

To attain the above object, the present invention is directed to a cogged V-belt comprising: a belt body in which a cord is arranged at specific pitches in a belt width direction and is embedded along the length of the belt; and a plurality of cogs formed in the shape of waves at specific pitches along the length of the belt on the bottom surface of the belt body, wherein the V-belt angle between both side surfaces of the belt body is set to 24-34° and a rubber layer of the belt body is not coated with a fabric but exposed on both the side surfaces of the belt body. The present invention has the following features.

In detail, a first feature of the present invention is that the top surface of the belt body is coated with a stretchable top fabric at least partly including woollie yarns and the bottom surface of the belt body is coated with a bottom fabric formed of non-woven fabric or non-woven paper along the waveform of the cogs. In short, this cogged V-belt is a commonly-called raw edge cogged V-belt in which the belt back face and the belt bottom face are covered with fabrics respectively.

A second feature of the present invention is that in the first feature of the present invention, the non-woven fabric or the non-woven paper forming the bottom fabric is set to the thickness of 0.01-0.3 mm and the density of 3-100 g/m².

A third feature of the present invention is that the rubber layer of the belt body is not coated with a top fabric but exposed on the top surface of the belt body and the bottom surface of the belt body is coated with a bottom fabric formed of non-woven fabric or non-woven paper along the waveform of the cogs. In short, this cogged V-belt has the structure that only the belt bottom face is provided with a fabric.

A fourth feature of the present invention is that in the third feature of the present invention, the non-woven fabric or the non-woven paper forming the bottom fabric is set to the thickness of 0.01-0.3 mm and the density of 3-100 g/m².

### -Operation-

Under the above structure, in the first feature of the present invention, the stretchable top fabric at least partly including woollie yarns responds to the stretching of the cogged V-belt passing a pulley to stretch with no substantial resistance, thereby increasing a bending property on the belt back face side. Further, the bottom fabric formed of non-woven fabric or non-woven paper is readily fit to the bumps and dips corresponding to the cog form of the mold surface by pouring pressure of unvulcanized rubber in molding, so that the shape of cogs can be readily made and the cogs protrude to the desired dimension, thereby obtaining an excellent bending property on the belt bottom face side.

In detail, since the strength of the non-woven fabric or the non-woven paper is generally very small as compared with that of a woven fabric, interweave or bonding between filaments forming the non-woven fabric or the non-woven paper is partly removed at the dips of the mold surface corresponding to the cog tops by the action of pouring pressure of unvulcanized rubber, or eventually, the filaments are partly broken at the dips, so that the non-woven fabric or the non-woven paper can be suitably fit to the bumps and dips of the mold surface without lifting. Further, since the unvulcanized rubber oozes through the place of partial removal of interweave or bonding between filaments to enter the dips of the mold surface so that the dips are filled with rubber material with no clearance, the cogged V-belt can be molded in the adequate form without prevention of projection of cogs.

Both the excellent bending properties on the belt back face side and the belt bottom face side thus obtained smoothly bend the cogged V-belt passing a pulley even if the belt is used in low gear conditions that high torque is transmitted to the belt at a low speed rotation or even if the cog height is originally low. This reduces the frequency of occurrence of slip so that excessive heat production due to slip can be avoided, thereby obtaining a long-life cogged V-belt difficult to produce cracks and breakages. In particular, when the cogged V-belt passes a pulley, the non-woven fabric or the non-woven paper bends so as to respond to the motion of the belt. At this time, removal of bonding between filaments forming the non-woven fabric or the non-woven paper can be made with no substantial resistance so that the cogged V-belt bends so as to smoothly respond to the shape of the pulley.

In the third feature of the present invention, since a top fabric that has the possibility of preventing a bending property of the belt back face while stretchable is not provided, the bending property of the cogged V-belt can be further increased so that the frequency of occurrence of slip can be further decreased thereby further enhancing the quality of the cogged V-belt.

In a cogged V-belt in which neither top fabric nor bottom fabric is provided, the bending property of the cogged V-belt is never prevented so that the bending property can be further increased. This reduces the frequency of occurrence of slip thereby further enhancing the quality of the cogged V-belt. The bending property of this case is substantially equal to the third feature case that the cogged V-belt has a bottom fabric. The reason for this is that though the belt of the third feature case has a bottom fabric, this bottom fabric has no substantial effect on the bending property of the cogged V-belt and therefore it can be understood that the third feature case is equal to the case that neither top fabric nor bottom fabric is provided. Further, since the pouring of unvulcanized rubber is never prevented in molding, cogs having a desired height can be securely obtained.

In the second and fourth features of the present invention, since the bottom surface of the belt body is coated (subjected to adhesion by vulcanization) with non-woven fabric or non-woven paper of which the thickness is set to 0.01-0.3 mm and the density is set to 3-100 g/m² and therefore the non-woven fabric or the non-woven paper is thin and very small in strength, the cogs can be securely projected in molding.

In detail, since the above-mentioned non-woven fabric or non-woven paper extends in the form of a thin layer on the surface of the cogs in molding so as to be embedded into rubber material and it becomes in the state that removal of bonding between filaments of the non-woven fabric or the non-woven paper and breakage of filaments are made without resistance, cogs having a desired height can be further securely formed. Further, when the cogged V-belt passes a pulley, filament resistance of the non-woven fabric or the non-woven paper due to bending of the belt is substantially eliminated. This further enhances the bending property of the cogged V-belt. Furthermore, even if bonding between filaments of the non-woven fabric or the non-woven paper is removed or the filaments are broken, the non-woven fabric or the non-woven paper cannot be peeled because the filaments are embedded into rubber material.

### [Brief Description of Drawings]

Fig. 1 is a perspective view partly showing a cogged V-belt according to Embodiment 1 having both of a top fabric and a bottom fabric.

Fig. 2 is a perspective view partly showing a cogged V-belt according to Embodiment 2 having no top fabric but having only a bottom fabric.

Fig. 3 is a graph showing data on slip characteristics of Embodiments 1-2 and a comparative example.

Fig. 4 is a diagram schematically showing the structure of a belt running tester used for evaluation of slip characteristics .

Fig. 5 is a diagram schematically showing the structure of a belt running tester used for evaluation of durability.

### [Best Mode for Carrying Out the Invention]

Description is made below about embodiments of the present invention with reference to the drawings.

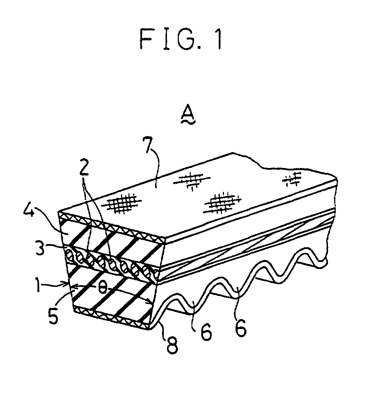

Figs. 1-2 show respective cogged V-belts A according to respective embodiments of the present invention. The difference among these two cogged V-belts is only in presence or absence of a top fabric. The remaining structural components are common to the two cogged V-belts.

In detail, these two types of cogged v-belts A each have a belt body 1 in common. The belt body 1 is composed of an adhesion rubber layer 3 in which a cord 2 is arranged at specific pitches in a belt width direction and is embedded along the length of the belt, and a tension rubber layer 4 and a compression rubber layer 5 which are formed in one piece together with the adhesion rubber layer 3 so as to be located on and under the adhesion rubber layer 3 respectively. On the bottom surface of the compression rubber layer 5 of the belt body 1, a plurality of cogs 6 are formed in the shape of waveform at specific pitches along the length of the belt. The V-belt angle θ between both side surfaces of the belt body 1 is set to 24-34° . These two cogged V-belts A are used as a variable speed V-belt for motorcycle such as a scooter.

The cord 2 is produced in such a manner that fibers such as polyester, polyamide, aramid and glass fibers are intertwisted so as to be formed in a suitable cord according to the use of the belt, and is then subjected to hot drawing treatment and adhesion treatment.

The adhesion rubber layer 3, the tension rubber layer 4 and the compression rubber layer 5, which form the belt body 1, are each formed of a rubber elastic body made of compounded rubber, for example, in which a suitable additive according to the use of the belt is added to chloroprene rubber (CR), styrene-butadiene rubber (SBR), acrylonitrile-butadiene rubber (NBR), natural rubber (NR) or a rubber blend of such kind of rubber. Further, what the two types of cogged V-belts A have in common is that both the side surfaces of the belt body 1 are coated with no fabric and the rubber layer of the belt body 1 is exposed. However, these cogged V-belts are different from each other in the following points:

In the cogged V-belt A shown in Fig. 1, the top surface of the belt body 1 is coated with a top fabric 7 and the bottom surface of the belt body 1 is coated with a bottom fabric 8 along the form of cogs 6. That is, this cogged V-belt A is a so-called raw edge cogged V-belt.

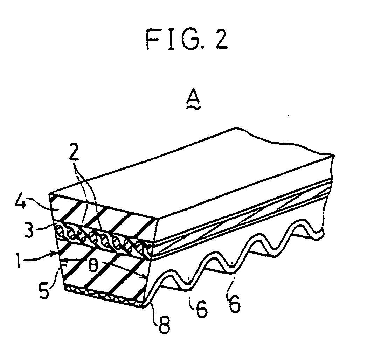

In the cogged V-belt A shown in Fig. 2, while the top fabric 7 as mentioned above is not adhered to the top surface of the belt body 1 and therefore the rubber layer of the belt body 1 is exposed on the top surface, the bottom surface of the belt body 1 is coated with a bottom fabric 8 along the waveform of the cogs 6. That is, the cogged V-belt A shown in Fig. 2 is a belt that the top fabric 7 is removed from the cogged V-belt A shown in Fig. 1.

Further, as one of features of the present invention, the top fabric 7 is formed stretchably by at least partly using woolly yarns as component yarns. For example, the stretchability of the top fabric 7 may be accomplished in a way that uses woollie yarns for weft yarns.

As another one of features of the present invention, the bottom fabric 8 is made of non-woven fabric or non-woven paper. For the non-woven fabric or non-woven paper, man-made fibers such as polyester, polyamide, rayon, vinylon, cellulose and pulp, natural fibers or a fiber blend of fibers of such kind may be used. Further, in the non-woven fabric or the non-woven paper, the thickness may be set to 0.01-0.3 mm and the density may be set to 3-100 g/m².

Each range of the thickness and the density of the non-woven fabric or the non-woven paper is a design range for forming cogs 6 having a desired dimension by molding. The lower limit of each range is defined under constraints on production of the non-woven fabric or the non-woven paper. The upper limit of each range is defined under constraints on molding. More specifically, the ranges are defined in order that at the time of molding and belt bending, bonding between filaments of the non-woven fabric or the non-woven paper are removed with no substantial resistance and the filaments are broken with no substantial resistance so that the cogs 6 cannot be prevented from projecting thereby adequately fitting the non-woven fabric or the non-woven paper to bumps and dips of the mold surface and bringing the non-woven fabric or the non-woven paper into smooth response to the belt bending action.

Next, the two types of cogged V-belts A above-mentioned (Embodiments 1-2) are described in detail together with a comparative example. All of cogged V-belts of Embodiments 1-2 and a comparative example, used for the following test, have the thickness of 8 mm and the cog pitch of 8 mm in common. The cogged V-belt of the comparative example is a raw edge type belt that the top and bottom surfaces of the belt body are each coated with a fabric, in common with Embodiment 1.

### <Fabric used in Embodiment 1>

The top fabric is formed in such a manner that spun yarns as warp yarns made of 6,6-nylon of 210d/1 are twill-woven with woolly yarns as weft yarns of 40d/5. The warp yarns have the density of 200 yarns per 5 cm and the weft yarns have the density of 140 yarns per 5 cm.

The bottom fabric is made of blended yarns of pulp and rayon, which are composed of 15% by weight of pulp and 85% by weight of rayon and are known by trade name NEW-SOFLON L#140 produced by Uni Charm Corporation, and has the density of 14 g/m².

### <Fabric used for Embodiment 2>

The same bottom fabric as in Embodiment 1 is used.

### <Fabric used for Comparative Example>

The top fabric is a bias fabric in which warp yarns and weft yarns both made of three folded S twist cotton yarns of yarn number 20 are woven with the density of 70 yarns per 5 cm so as to be bias oriented at an angle of 120° . The bottom fabric is the same as the top fabric used in Embodiment 1.

Among the cog heights of the cogged V-belts produced under the above conditions, each cog height of Embodiment 1-2 was 4.0 mm while the cog height of the comparative example was 3.5 mm, lower than those of Embodiments 1-2.

The cogged V-belts thus obtained were evaluated about slip characteristics, temperature under a load and durability in the following conditions.

### <Evaluation of Slip Characteristics>

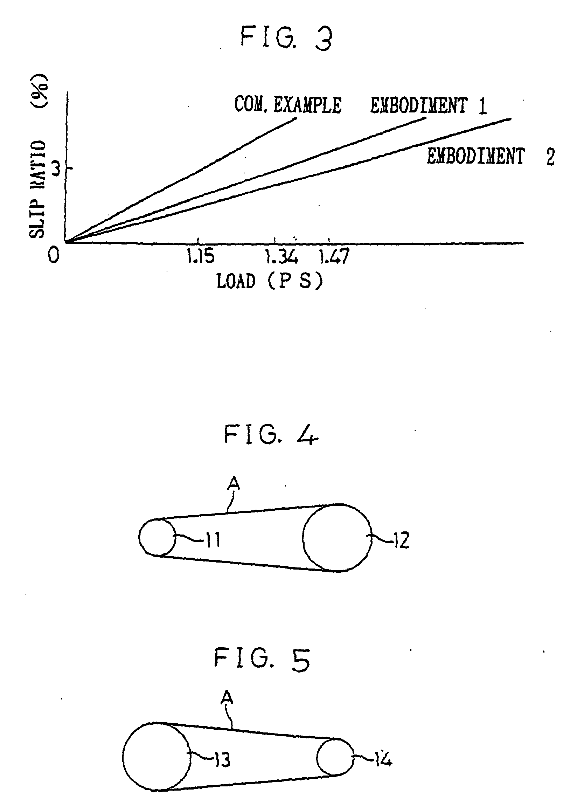

As shown in Fig. 4, a cogged V-belt A as a sample was wound between a driving pulley 11 (40 mm diameter, 6500 rpm) and a driven pulley 12 (100 mm diameter) of a belt running tester, and the slip ratio of the cogged V-belt A was checked with changing the value of load on the driven pulley 12 under 90°C atmosphere. As a result, as shown in Fig. 3, the value of load reaching the slip ratio of 3% is 1.3 PS in Embodiment 1, and 1.47 PS in Embodiment 2. However, in the comparative example, the value of load reaching the slip ratio of 3% is 1.15 PS so that the belt of the comparative example caused a slip under low load at an early stage.

### <Evaluation of Temperature under a Load>

Respective cogged V-belts A were run under 1 PS load for 30 minutes in the same running conditions as in the evaluation of slip characteristics, and then the temperature of the side face located on the driven pulley 12 side of each belt was checked. As a result, the temperature was 120°C in Embodiment 1 and 118°C in Embodiment 2. In the comparative example, however, the temperature was 126°C higher than those in Embodiments 1-2.

### <Evaluation of Durability>

As shown in Fig. 5, each cogged V-belt A as a sample was wound between a driving pulley 13 (80 mm diameter, 6500 rpm) and a driven pulley 14 (70 mm diameter, 5.5 PS load) of a belt running tester and was then run under 95°C atmosphere. As a result, the belt life time was 335 hours in Embodiment 1 and 355 hours in Embodiments 2 and 3. In the comparative example, however, the life time was 190 hours extremely shorter than those in Embodiments 1-2.

The above characteristic differences between Embodiments 1-2 and the comparative example are mainly due to the difference on material that the bottom fabric is made of a woven fabric or made of non-woven fabric or non-woven paper.

### [Industrial Applicability]

As mentioned so far, when the cogged V-belt of the present invention is used as a variable speed V-belt for motorcycle such as a scooter, its excellent bending property reduces the frequency of occurrence of slip to prevent production of cracks and breakages of the belt thereby increasing the belt life.

## Claims

1. A cogged V-belt (A) comprising: a belt body (1) in which a cord (2) is arranged at specific pitches in a belt width direction and is embedded along the length of the belt (A); and a plurality of cogs (6) formed in the shape of waves at specific pitches along the length of the belt (A) on the bottom surface of the belt body (1), the V-belt angle between both side surfaces of the belt body (1) being set to 24-34°, a rubber layer (3,4,5) of the belt body (1) being not coated with a fabric but exposed on both the side surfaces of the belt body (1),
**characterized in that** the top surface of the belt body (1) is coated with a stretchable top fabric (7) at least partly including woolly yarns and
the bottom surface of the belt body (1) is coated with a bottom fabric (8) formed of non-woven fabric or non-woven paper along the waveform of the cogs (6).

2. A cogged V-belt (A) according to claim 1, **characterized in that** the non-woven fabric or the non-woven paper forming the bottom fabric is set to the thickness of 0.01-0.3 mm and the density of 3-100 g/m².

3. A cogged V-belt (A) comprising: a belt body (1) in which a cord (2) is arranged at specific pitches in a belt width direction and is embedded along the length of the belt (A); and a plurality of cogs (6) formed in the shape of waves at specific pitches along the length of the belt (A) on the bottom surface of the belt body (1), the V-belt angle between both side surfaces of the belt body (1) being set to 24-34°, a rubber layer (3,4,5) of the belt body (1) being not coated with a fabric but exposed on both the side surfaces of the belt body (1),
**characterized in that** the rubber layer (3,4,5) of the belt body (1) is not coated with a top fabric but exposed on the top surface of the belt body (1) and
the bottom surface of the belt body (1) is coated with a bottom fabric (8) formed of non-woven fabric or non-woven paper along the waveform of the cogs (6).

4. A cogged V-belt (A) according to claim 3, **characterized in that** the non-woven fabric or the non-woven paper forming the bottom fabric is set to the thickness of 0.01-0.3 mm and the density of 3-100 g/m².

## Patentansprüche

1. Gezahnter Keilriemen (A) aufweisend: einen Riemenkörper (1), in welchem eine Schnur (2) in bestimmten Abständen in einer Riemen-Breitenrichtung angeordnet ist und entlang der Länge des Riemens (A) eingebettet ist, und eine Mehrzahl von Zähnen (6), die in der Form von Wellen in bestimmten Abständen entlang der Länge des Riemens (A) an der unteren Fläche des Riemenkörpers (1) ausgebildet sind, wobei der Keilriemen-Winkel zwischen beiden Seitenflächen des Riemenkörpers (1) auf 24° - 34° festgelegt ist, und wobei eine Gummischicht (3, 4, 5) des Riemenkörpers (1) nicht mit einem Gewebe beschichtet ist, sondern an beiden Seitenflächen des Riemenkörpers (1) freiliegt,
**gekennzeichnet dadurch, dass** die obere Fläche des Riemenkörpers (1) mit einem dehnbaren oberen Gewebe (7) beschichtet ist, das zumindest teilweise Wollgarne aufweist, und
die untere Fläche des Riemenkörpers (1) mit einem unteren Gewebe (8) beschichtet ist, das aus Vliesgewebe oder Vliespapier entlang der Wellenform der Zähne (6) ausgebildet ist.

2. Gezahnter Keilriemen gemäß Anspruch 1, **gekennzeichnet dadurch, dass** das Vliesgewebe oder das Vliespapier, das das untere Gewebe ausbildet, auf die Dicke von 0,01 mm - 0,3 mm und die Dichte von 3 g/m² - 100 g/m² festgelegt ist.

3. Gezahnter Keilriemen (A) aufweisend: einen Riemenkörper (1), in welchem eine Schnur (2) in bestimmten Abständen in einer Riemen-Breitenrichtung angeordnet ist und entlang der Länge des Riemens (A) eingebettet ist, und eine Mehrzahl von Zähnen (6), die in der Form von Wellen in bestimmten Abständen entlang der Länge des Riemens (A) an der unteren Fläche des Riemenkörpers (1) ausgebildet sind, wobei der Keilriemen-Winkel zwischen beiden Seitenflächen des Riemenkörpers (1) auf 24° - 34° festgelegt ist, und wobei eine Gummischicht (3, 4, 5) des Riemenkörpers (1) nicht mit einem Gewebe beschichtet ist, sondern an beiden Seitenflächen des Riemenkörpers (1) freiliegt,
**gekennzeichnet dadurch, dass** die Gummischicht (3, 4, 5) des Riemenkörpers (1) nicht mit einem oberen Gewebe beschichtet ist, sondern an der oberen Fläche des Riemenkörpers (1) freiliegt, und
die untere Fläche des Riemenkörpers (1) mit einem unteren Gewebe (8) beschichtet ist, das aus Vliesgewebe oder Vliespapier entlang der Wellenform der Zähne (6) ausgebildet ist.

4. Gezahnter Keilriemen (A) gemäß Anspruch 3, **gekennzeichnet dadurch, dass** das Vliesgewebe oder das Vliespapier, das das untere Gewebe ausbildet, auf die Dicke von 0,01 mm - 0,3 mm und die Dichte von 3 g/m² - 100 g/m² festgelegt ist.

## Revendications

1. Courroie trapézoïdale crantée (A) comprenant : un corps de courroie (1) dans lequel un cablé (2) est agencé selon des pas spécifiques dans le sens de la largeur de la courroie et est incrusté sur la longueur de la courroie (A) ; et une pluralité de crans (6) présentant la forme d'ondes à des pas spécifiques sur la longueur de la courroie (A) sur la surface inférieure du corps de courroie (1), l'angle de la courroie trapézoïdale entre les deux surfaces latérales du corps de courroie (1) étant fixé entre 24 et 34°, une couche de caoutchouc (3, 4, 5) du corps de courroie (1) n'étant pas revêtue d'un tissu, mais exposée sur les deux surfaces latérales du corps de courroie (1),
**caractérisée en ce que** la surface supérieure du corps de courroie (1) est revêtue d'un tissu supérieur extensible (7) comprenant au moins partiellement des fils de laine et
la surface inférieure du corps de courroie (1) est revêtue d'un tissu inférieur (8) constitué de tissu non-tissé ou de papier non-tissé le long de la forme d'onde des crans (6).

2. Courroie trapézoïdale crantée (A) selon la revendication 1, **caractérisée en ce que** le tissu non-tissé ou le papier non-tissé formant le tissu inférieur présente une épaisseur comprise entre 0,01 et 0,3 mm et une densité comprise entre 3 et 100 g/m².

3. Courroie trapézoïdale crantée (A) comprenant : un corps de courroie (1) dans lequel un cablé (2) est agencé selon des pas spécifiques dans le sens de la largeur de la courroie et est incrusté sur la longueur de la courroie (A) ; et une pluralité de crans (6) présentant la forme d'ondes à des pas spécifiques sur la longueur de la courroie (A) sur la surface inférieure du corps de courroie (1), l'angle de la courroie trapézoïdale entre les deux surfaces latérales du corps de courroie (1) étant fixé entre 24 et 34°, une couche de caoutchouc (3, 4, 5) du corps de courroie (1) n'étant pas revêtue d'un tissu, mais exposée sur les deux surfaces latérales du corps de courroie (1),
**caractérisée en ce que** la couche de caoutchouc (3, 4, 5) du corps de courroie (1) n'est pas revêtue d'un tissu supérieur, mais exposée sur la surface supérieure du corps de courroie (1) et
la surface inférieure du corps de courroie (1) est revêtue d'un tissu inférieur (8) constitué de tissu non-tissé ou de papier non-tissé le long de la forme d'onde des crans (6).

4. Courroie trapézoïdale crantée (A) selon la revendication 3, **caractérisée en ce que** le tissu non-tissé ou le papier non tissé formant le tissu inférieur présente une épaisseur comprise entre 0,01 et 0,3 mm et une densité comprise entre 3 et 100 g/m².
